# EUROPÄISCHE PATENTSCHRIFT

(11) **EP 1 039 607 B1**
(45) Veröffentlichungstag und Bekanntmachung des Hinweises auf die Patenterteilung: **16.01.2002**
(21) Anmeldenummer: 99103811.8
(22) Anmeldetag: 26.02.1999
(51) Int. Cl.: H02G 3/12, H02G 3/08

(54) **Aufnahmedose**
Connecting box
Boîte de raccordement

(43) Veröffentlichungstag der Anmeldung: 27.09.2000
(73) Patentinhaber: Wintersteiger, Herbert, 84544 Aschau am Inn (DE)
(72) Erfinder: Wintersteiger, Herbert, 84544 Aschau am Inn (DE)
(74) Vertreter: Grünecker, Kinkeldey, Stockmair & Schwanhäusser Anwaltssozietät

(56) Entgegenhaltungen:
- DE-A- 3 528 965
- DE-U- 7 048 119
- FR-A- 2 339 318
- GB-A- 2 305 304
- US-A- 5 042 673

## Beschreibung

Die vorliegende Erfindung betrifft eine Aufnahmedose für elektrische Einsätze, insbesondere für Steckdosen, Schalterdosen, Verteilerdosen, Lampeneinsätzen oder dergleichen zur Montage in einer Wand bzw. Decke, insbesondere in Mauerwerk oder Hohlwänden sowie Verfahren zur Montage einer Aufnahmedose.

Bei der Montage von elektrischen Installationen, wie z.B. Schaltern oder Steckdosen, besteht nach VDE-Vorschrift die Forderung, daß diese in Aufnahmedosen eingesetzt werden, die "putzbündig" in der Wand angebracht sind.

Bei dem Setzen herkömmlicher Dosen werden diese in der Regel auf eine rohe Ziegelwand oder eine unverputzte Betonwand gesetzt, wobei anschließend eine Putzschicht auf die Ziegel- oder Betonwand aufgebracht wird. Dabei besteht zum einen die Problematik, daß ein Innenraum der herkömmlichen Aufnahmedose durch Putz oder dergleichen verschmutzt wird, und zum anderen das Problem, daß in der Regel die Putzschicht nicht mit der axialen Länge der Putzdose übereinstimmt, so daß in vielen Fällen die Aufnahmedose zu tief sitzt. In diesen Fällen ist ein fachgerechtes Einsetzen von Schaltern, Steckdosen und dergleichen nur schwer und unter erhöhtem Zeitaufwand möglich.

Um dieses Problem zu beseitigen, sind im Stand der Technik Aufnahmedosen bekannt, die eine Überlänge in axialer Richtung aufweisen. Diese Dosen werden in bekannter Weise an der Ziegelwand befestigt, und anschließend wird diese Wand in bekannter Weise verputzt. Dabei sollte die überlange Aufnahmedose immer über die Putzschicht hervor ragen. Der Verputzer muß den Putz um diese überlange Aufnahmedose herum auftragen. Zur Vermeidung einer Verschmutzung der Dose kann ein Stopfen oder dergleichen in diese eingesetzt sein. Alternativ dazu ist im Stand der Technik eine sogenannte Aufsteckdose bekannt, die in die herkömmlichen Dosen eingesetzt wird und ebenfalls eine entsprechende Überlänge aufweist, so daß diese über die Putzschicht hervorsteht.

Nach Beendigung der Verputzarbeiten wird der Überstand dieser Aufnahmedose bzw. des Doseneinsatz durch einen Spezialdosenfräser abgefräst, um so eine putzbündige Aufnahmedose zu erhalten. Bei diesem System gemäß dem Stand der Technik ist das Abfräsen mit einem Spezialwerkzeug jedoch zeitaufwendig und verursacht zusätzliche Kosten zum einen durch den zusätzlichen Arbeitsgang, zum andern durch die Bereitstellung des genannten Spezialfräswerkzeugs.

Aus der DE-U-70 48 119 ist ein Unterputz-Abzweigkasten bekannt, bei der ein Mantelkörper, der mit einem Deckel verschlossen werden kann, in ein Gehäuse einsetzbar ist, wobei die Axialposition des Mantelkörpers in Bezug zu dem Gehäuse eingestellt werden kann. Zur Deckelbefestigung sind besondere Randleisten an dem Mantelkörper erforderlich.

Aus der FR-A-2,339,318 ist eine Schalterdoseneinrichtung bekannt, bei der ein Aufnahmekörper für den Schalter in einer Trockenbauwand durch eine wandbündig eingesetzte Hülse aufgenommen ist. Innere End-Rastzungen der Hülse greifen in einen Außengewindeabschnitt des Aufnahmekörpers ein.

Aus der US-A-5,042,673 ist eine Aufnahmeanordnung für elektrische Einsätze zur wandbündigen Aufnahme bekannt, wobei ein in seiner Axialposition über obere und untere Stellschraubenpaare einstellbares Aufnahmeteil vorgesehen ist.

Es ist daher die Aufgabe der vorliegenden Erfindung eine Aufnahmedose für elektrische Einsätze der eingangs genannten Art sowie Verfahren zur Montage einer Aufnahmedose anzugeben, wobei die Aufnahmedose in einfacher und kostengünstiger Weise anbringbar ist und elektrische Einsätze, Insbesondere Steckdosen, Schalterdosen, Verteilerdosen, Lampeneinsätzen oder dergleichen zuverlässig montierbar sind, und wobei das Eindringen von Putz oder Verschmutzungen während der Montage der Aufnahmedose zuverlässig verhindert ist.

Diese Aufgabe wird hinsichtlich einer Aufnahmedose der eingangs genannten Art erfindungsgemäß durch die Merkmale des Anspruches 1 gelöst.

Hinsichtlich eines Verfahrens zur Montage einer Aufnahmedose wird die obige Aufgabe erfindungsgemäß durch die Merkmale der Ansprüche 16 und 18 gelöst. Dadurch ist es auf vorteilhafte und einfache Weise möglich die Aufnahmedose putzbündig zu setzen.

Bevorzugte Weiterbildungen des Erfindungsgegenstandes sind sowohl hinsichtlich der Aufnahmedose als auch der Montageverfahren in den jeweiligen Unteransprüchen dargelegt.

Nachfolgend wird die vorliegende Erfindung anhand von Ausführungsbeispielen in Verbindung mit den beigefügten Zeichnungen näher erläutert. In den Zeichnungen zeigen:
- Fig.1: eine Seitenansicht eines ersten Ausführungsbeispiels mit einem Dosenunterteil und einem Dosenoberteil,
- Fig.2: eine Draufsicht des Dosenoberteils gemäß dem ersten Ausführungsbeispiel,
- Fig.3: eine Draufsicht des Dosenunterteils gemäß dem ersten Ausführungsbeispiel,
- Fig.4: eine Vorderansicht des Dosenunterteils gemäß dem ersten Ausführungsbeispiel,
- Fig.5: die Verbindung von zwei Dosenunterteilen gemäß dem ersten Ausführungsbeispiel,
- Fig.6: eine Seitenansicht einer Aufnahmedose mit Dosenunterteil und Dosenoberteil gemäß einem zweiten Ausführungsbeispiel,
- Fig.7: ein Dosenunterteil mit einem Bohrdeckel gemäß dem zweiten Ausführungsbeispiel,
- Fig.8: eine Vorderansicht eines Dosenoberteils gemäß dem zweiten Ausführungsbeispiel,
- Fig.9: eine Draufsicht des Dosenunterteils gemäß dem zweiten Ausführungsbeispiel,
- Fig.10: eine Vorderansicht des Dosenunterteils gemäß dem zweiten Ausführungsbeispiel,
- Fig.11: eine Seitenansicht des Dosenoberteils im Schnitt gemäß dem zweiten Ausführungsbeispiel,
- Fig.12: eine Vorderansicht des Bohrdeckels gemäß dem zweiten Ausführungsbeispiel,
- Fig.13: eine Rückansicht des Bohrdeckels gemäß dem zweiten Ausführungsbeispiel,
- Fig.14: eine Schnittansicht des Bohrdeckels gemäß dem zweiten Ausführungsbeispiel entlang der Linie A -A in Fig. 13,
- Fig.15: eine Bohrschablone zur Montage einer Aufnahmedose gemäß dem zweiten Aus führungsbeispiel,
- Fig.16: einen Wandabschnitt mit einer Putzschicht und einer montierten Aufnahmedose gemäß dem ersten Ausführungsbeispiel und
- Fig.17a und 17b: eine Hohlwand zur Erläuterung der Montage der Aufnahmedose gemäß dem zweiten Ausführungsbeispiel.

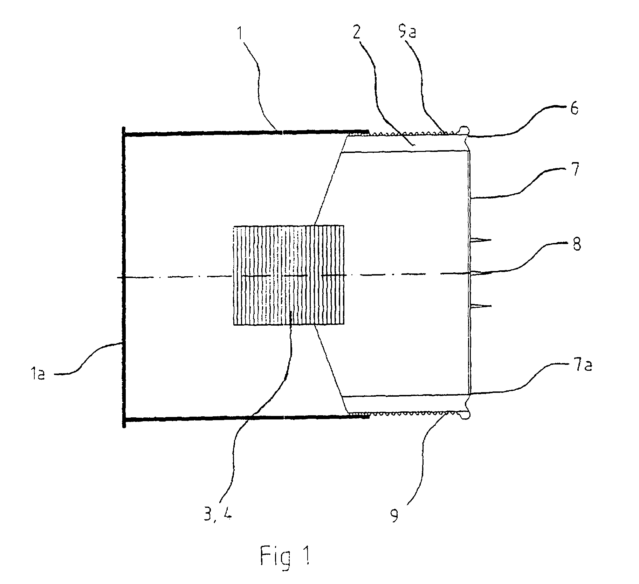

Figur 1 zeigt ein erstes Ausführungsbeispiel der Aufnahmedose für elektrische Einsätze. Eine derartige Aufnahmedose ist insbesondere zum Einsetzen von Steckdosen, Schalterdosen oder Verteilerdosen geeignet. Darüber hinaus kann in diese Aufnahmedose auch ein entsprechender Lampeneinsatz, wie beispielsweise eine Halogenlampe oder dergleichen, eingesetzt werden.

Die gezeigte Aufnahmedose umfaßt im wesentlichen ein Dosenunterteil 1 und ein Dosenoberteil 2, das entlang einer Längsachse des Dosenunterteils 1 axial einstellbar vorgesehen ist. Gemäß der gezeigten Ausführungsform ist das Dosenunterteil im wesentlichen zylinderförmig ausgebildet und an seinem hinteren Endabschnitt durch eine Wand 1a verschlossen. An dem vorderen Endabschnitt des Dosenunterteils 1 ist eine Öffnung vorgesehen, in der das ebenfalls zylinderförmig ausgebildete Dosenoberteil 2 eingesetzt ist. Das Dosenoberteil 2 ist in dem Dosenunterteil 1 axial verschiebbar (nach links und rechts in Fig.1) gelagert.

Zur Fixierung der axialen Lage des Dosenoberteils 2 bezüglich des Dosenunterteils 1 ist eine Lagebefestigungseinrichtung vorgesehen. Gemäß der ersten Ausführungsform besteht diese Lagebefestigungseinrichtung aus einer ersten Rastverzahnung 3, die an einer Innenoberfläche des Dosenunterteils 1 vorgesehen ist, und aus einer zweiten Rastverzahnung 4, die an einer Außenoberfläche des Dosenoberteils 2 vorgesehen ist. Die erste und zweite Rastverzahnung 3, 4 sind jeweils gegenüberliegend angeordnet, um miteinander in Eingriff zu gelangen.

Diese Rastverzahnungen 3, 4 ermöglichen eine axiale Verschiebung des Dosenoberteils 2 bezüglich des Dosenunterteils 1 und verhindern das Herausziehen des Dosenoberteils 2 aus dem Dosenunterteil, so daß das Dosenoberteil 2 zwar in das Dosenunterteil 1 hineingedrückt werden kann; eine axiale Verschiebung des Dosenoberteils 2 bezüglich des Dosenunterteils 1 in Gegenrichtung wird jedoch verhindert.

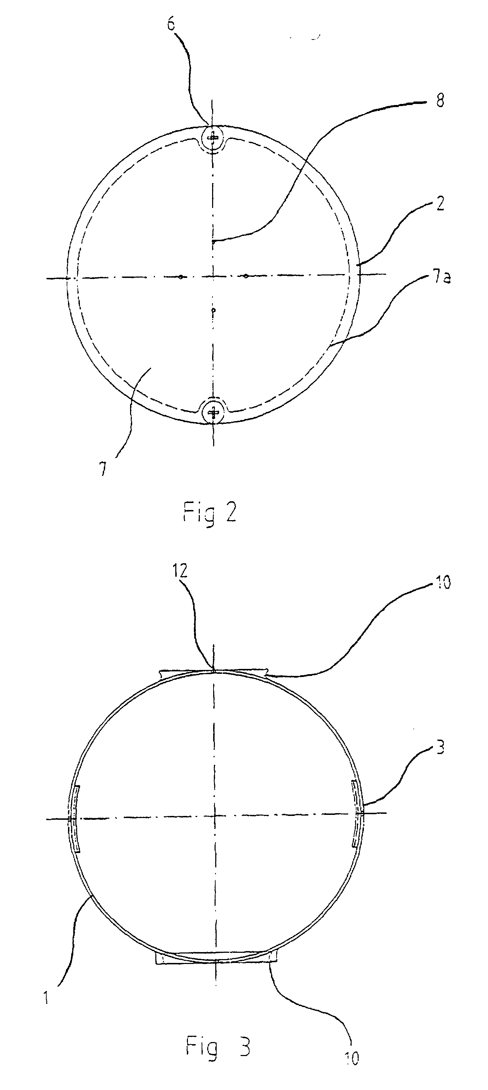

Bei diesem Ausführungsbeispiel sind sowohl die erste Rastverzahnung 3 als auch die zweite Rastverzahnung 4 jeweils auf einen Teilbereich der Oberflächen des Dosenunterteils 1 und des Dosenoberteils 2 begrenzt. Wie aus Fig.3 hervorgeht, sind die Rastverzahnungen 3, 4 gegenüberliegend um 180° versetzt angeordnet, so daß sich im wesentlichen zwei Eingriffsbereiche ergeben.

Bei einer derartigen Rastverzahnungsverbindung läßt sich das Dosenoberteil 2 dennoch in einfacher Weise von dem Dosenunterteil 1 trennen. Dazu wird das Dosenoberteil 2 um ca. 90° bezüglich dem Dosenunterteil gedreht, so daß die ersten und zweiten Rastverzahnungen 3, 4 außer Eingriff kommen. Anschließend läßt sich das Dosenoberteil 2 leicht aus dem Dosenunterteil 1 herausziehen. Dadurch läßt sich die Lage des Dosenoberteils 2 in einfacher Weise entlang der Längsachse des Dosenunterteils 1 einstellen und das Dosenunterteil 2 ist dennoch gegen gewaltsames Herausziehen aus dem Dosenunterteil 1 gesichert. Die Aufgabe der ersten und zweiten Rastverzahnung 3, 4 gemäß dem ersten Ausführungsbeispiel hat insbesondere die Aufgabe, das Dosenoberteil 2 axial verschiebbar in dem Dosenunterteil 1 zu halten.

Bei der gezeigten Ausführungsform ist die erste Rastverzahnung 3 mit dem Dosenunterteil 1 und die zweite Rastverzahnung 4 mit dem Dosenoberteil 2 jeweils integral ausgebildet.

Alternativ zu der Rastverzahnung kann eine Einstellschraubeneinrichtung verwendet werden, wobei über eine oder mehrere Einstellschrauben die Lage des Dosenoberteils bezüglich des Dosenunterteils veränderbar ist.

Wie in Fig.1 gezeigt, weist das Dosenunterteil 1 eine hintere Wand 1a auf, die im wesentlichen als Flanschabschnitt zur Befestigung des Dosenunterteils 1 an einem Grundabschnitt, wie beispielsweise einer rohen Ziegelwand, vorgesehen ist. Wie aus den Fig. 1 und 3 hervorgeht, erstreckt sich von dieser hinteren Wand 1a ausgehend und im wesentlichen senkrecht zu dieser eine zylinderförmige Wand des Dosenunterteils 1, die einen Teil des Innenraums, der durch die Aufnahmedose gebildet wird, umschließt. Der vordere Endabschnitt des Dosenunterteils 1 weist eine Öffnung auf.

Ein hinterer Endabschnitt des Dosenoberteils 2 ist in die Öffnung des vorderen Endabschnitts des Dosenunterteils 1 eingesetzt, so daß sich die genannten Endabschnitte überlappen, wobei das Dosenoberteil 2 zum Dosenunterteil 1 hin offen ist.

Wie aus den Fig. 1 und 2 hervorgeht, weist das Dosenoberteil 2 eine Einsatzbefestigungseinrichtung 6 auf. Diese Einsatzbefestigungseinrichtung 6 besteht im wesentlichen aus zwei gegenüberliegend angeordneten Bohrungen, in die ein elektrischer Einsatz eingeschraubt werden kann, nachdem die Aufnahmedose montiert ist. Diese Bohrungen können bereits ein Gewinde bzw. einen Gewindeeinsatz aufweisen oder aber derart gestaltet sein, daß das Gewinde erst beim Einschrauben des elektrischen Einsatzes ausgebildet bzw. geschnitten wird.

Das erste Ausführungsbeispiel zeigt eine Einsatzbefestigungseinrichtung 6, die in dem Dosenoberteil 2 ausgebildet ist. Alternativ dazu kann eine entsprechende Einsatzbefestigungseinrichtung auch in dem Dosenunterteil bzw. in dem Dosenoberteil und dem Dosenunterteil vorgesehen sein. Weiterhin kann eine derartige Einsatzbefestigungseinrichtung mit einer oder mehreren Bohrungen kombiniert auch als Lagebefestigungseinrichtung ausgebildet sein, wie dies später noch beschrieben wird.

Wie in den Fig. 1 und 2 gezeigt, weist das Dosenoberteil 2 eine Abdeckung (Putzdeckel) 7 auf zum Verschließen des Innenraums, der durch das Dosenoberteil 2 und das Dosenunterteil 1 gebildet ist. Diese Abdeckung 7 erstreckt sich im wesentlichen senkrecht zu der Längsachse des Dosenunterteils 1 bzw. des Dosenoberteils 2. Durch die Abdeckung 7 an dem Dosenoberteil 2 wird auf vorteilhafte Weise verhindert, daß Schmutz, insbesondere Putz, Farbe oder dergleichen, in das Innere der Aufnahmedose gelangt, während diese an einer Wand oder Decke montiert ist und Putz, Farbe oder dergleichen aufgetragen wird.

Diese Abdeckung 7 ist entfernbar an dem Dosenoberteil 2 vorgesehen, um einen elektrischen Einsatz nach der Montage der Aufnahmedose in dem Innenraum der Aufnahmedose zu befestigen.

Gemäß der ersten Ausführungsform ist die Abdeckung 7 einstückig mit dem Dosenoberteil 2 ausgebildet. Zum Entfernen der Abdeckung 7 von dem Dosenoberteil 2, ist ein umlaufender Solltrennbereich 7a in Form einer Perforation vorgesehen, wie dies in Fig. 2 gezeigt ist.

Alternativ dazu kann die genannte Abdeckung auch in Form eines Deckels ausgebildet sein, der in die vordere Öffnung des Dosenoberteils einsetzbar ist.

Weiterhin zeigen die Fig. 1 und 2 einen Vorsprung 8, der an der Abdeckung 7 ausgebildet ist und sich von dem Dosenoberteil 2 weg erstreckt. In dem gezeigten Ausführungsbeispiel sind vier im wesentlichen symmetrisch angeordnete Vorsprünge 8 gezeigt. Alternativ dazu können auch mehr oder weniger dieser Vorsprünge vorgesehen sein, die in beliebiger Verteilung auf der Abdeckung angeordnet sind. Die in Fig. 1 gezeigten Vorsprünge 8 haben im wesentlichen die gleiche axiale Länge. Alternativ dazu können auch Vorsprünge mit unterschiedlicher axialer Länge vorgesehen sein. Die gezeigten Vorsprünge sind in bevorzugter Weise nadelförmig bzw. spitz zulaufend ausgebildet, und bestehen aus einem elastisch verformbaren Material. In bevorzugter Weise sind diese Vorsprünge 8 einstückig mit der Abdeckung 7 ausgebildet. Die Aufgabe dieser Vorsprünge 8 wird später erläutert.

Wie in Fig.1 gezeigt, weist das Dosenoberteil 2 einen Halteabschnitt 9 auf. Dieser Halteabschnitt 9 dient dazu, das Dosenoberteil 2 endgültig in einer Putzschicht zu halten, wie dies später noch genauer erläutert wird. In dem gezeigten Ausführungsbeispiel weist dieser Halteabschnitt 9 eine Mehrzahl von nach außen vorstehenden umlaufenden Rippen 9a auf.

Alternativ dazu kann der Halteabschnitt 9 auch aus einer einzigen umlaufenden Rippe 9a gebildet sein. Weiterhin kann ein Halteabschnitt an dem Dosenoberteil anstelle der genannten Rippen einen oder mehrere radial hervorstehende Noppen oder Vorsprünge umfassen. Die genannten Rippen oder die Noppen können umlaufend angeordnet oder auf bestimmte Bereiche der Außenoberfläche des Dosenoberteils begrenzt sein. Weiterhin kann der Halteabschnitt durch eine Weiterführung der vorgenannten zweiten Rastverzahnung auf dem Dosenoberteil gebildet sein. Es ist bei dem in bevorzugter Weise vorgesehenen Halteabschnitt wesentlich, daß dieser einen nach außen vorstehenden Bereich aufweist.

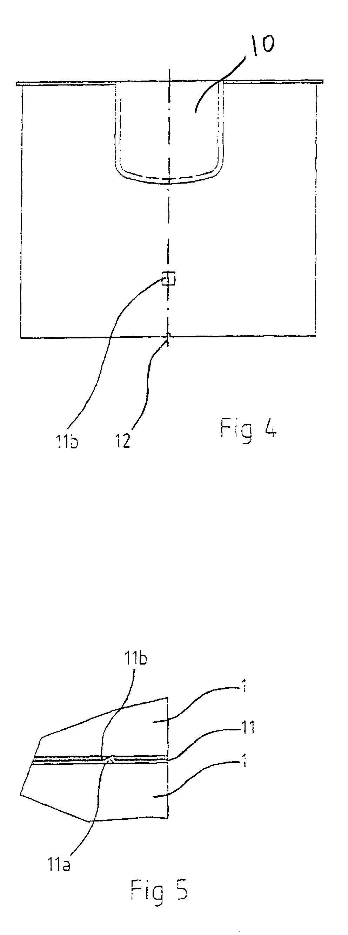

Wie aus der Fig. 4 hervorgeht, weist das Dosenunterteil 1 zumindest eine Anschlußöffnung 10 auf. Diese Anschlußöffnung 10 dient zur Zuführung von elektrischen Anschlußkabeln (nicht gezeigt), die zum Anschluß an den elektrischen Einsatz vorgesehen sind. Gemäß dem Ausführungsbeispiel in Fig. 4 ist diese Anschlußöffnung 10 durch einen Deckel verschlossen, der einstückig mit dem Dosenunterteil 1 ausgebildet ist, wobei ein Solltrennbereich in Form einer Perforation vorgesehen ist, um bei Bedarf diesen Deckel aus dem Dosenunterteil herauszubrechen, um so die Anschlußöffnung 10 zu bilden. In bevorzugter Weise weist das Dosenunterteil 1 zwei gegenüberliegende Anschlußöffnungen 10 auf, die um 180° zueinander versetzt sind, wie dies in Fig.3 gezeigt ist, um ein Durchführen der elektrischen Anschlußkabel durch das Dosenunterteil 1 zu ermöglichen.

Um eine Mehrzahl von Dosenunterteilen 1 in Reihe anordnen zu können, weist jedes Dosenunterteil 1 eine Verbindungseinrichtung 11 auf. Diese Verbindungseinrichtung 11 dient dazu, zwei benachbarte Dosenunterteile 1 miteinander zu verbinden. Gemäß dem bevorzugten Ausführungsbeispiel weist diese Verbindungseinrichtung 11 einen Verriegelungsvorsprung 11a auf, der an einer Seite eines ersten Dosenunterteils 1 angeordnet ist und mit einer entsprechenden Verriegelungsöffnung 11b eines zweiten Dosenunterteils 1 in Eingriff ist, um die beiden Dosenunterteile 1 miteinander zu verbinden, wie dies in Fig.5 gezeigt ist. Somit weist jedes Dosenunterteil 1 an einer Seite den genannten Verriegelungsvorsprung 11a und auf der gegenüberliegenden Seite um 180° versetzt eine entsprechende Verriegelungsöffnung 11b auf. Wie aus der Fig. 4 hervorgeht, sind die Anschlußöffnungen 10 und der jeweilige Verriegelungsvorsprung 11a sowie die Verriegelungsöffnung 11b symmetrisch zu einer Längsebene des Dosenunterteils 1 angeordnet.

Um das Dosenunterteil 1 entsprechend seiner radialen Lage eindeutig positionieren zu können, ist eine Lagemarkierung 12 vorgesehen. Wie in den Fig. 3 und 4 gezeigt, besteht diese Lagemarkierung 12 in bevorzugter Weise aus zwei Kerben, die gegenüberliegend zueinander um 180° versetzt angeordnet sind, und ebenfalls symmetrisch zu der genannten Längsebene ausgebildet sind.

Bei dem in den Fig. 1 bis 5 gezeigten Ausführungsbeispiel ist das Dosenoberteil 2 in das Dosenunterteil 1 eingesetzt, so daß ein vorderer Endabschnitt des Dosenunterteils 1 den hinteren Endabschnitt des Dosenoberteils 2 umschließt. Alternativ dazu kann das Dosenunterteil 1 auch derart gestaltet sein, daß es in das Dosenoberteil 2 einsetzbar ist, wobei ein hinterer Endabschnitt des Dosenoberteils 2 einen vorderen Endabschnitt des Dosenunterteils 1 umschließt.

Bei der gezeigten Aufnahmedose ist diese zur Aufnahme eines elektrischen Einsatzes vorgesehen, wobei das Dosenunterteil 1 und das Dosenoberteil 2 im wesentlichen zylinderförmig ausgebildet ist. Alternativ dazu können beispielsweise mehrere Dosenunterteile einstückig miteinander ausgebildet werden, so daß eine Gruppe von elektrischen Einsätzen montierbar ist. Dabei sind die jeweiligen Dosenunterteile beispielsweise in einer Linie oder in einer Gruppe sternförmig angeordnet. Ein derartiges Dosenunterteil kann mit einem Dosenoberteil kombiniert werden, das seinerseits entsprechend dem Dosenunterteil aus mehreren Dosenoberteilen besteht, die integral miteinander ausgebildet sind. Weiterhin kann ein Dosenunterteil, das in integraler Ausgestaltung zur Aufnahme mehrerer elektrischer Einsätze vorgesehen ist, auch mit einer entsprechenden Anzahl von einzelnen Dosenoberteilen kombiniert werden.

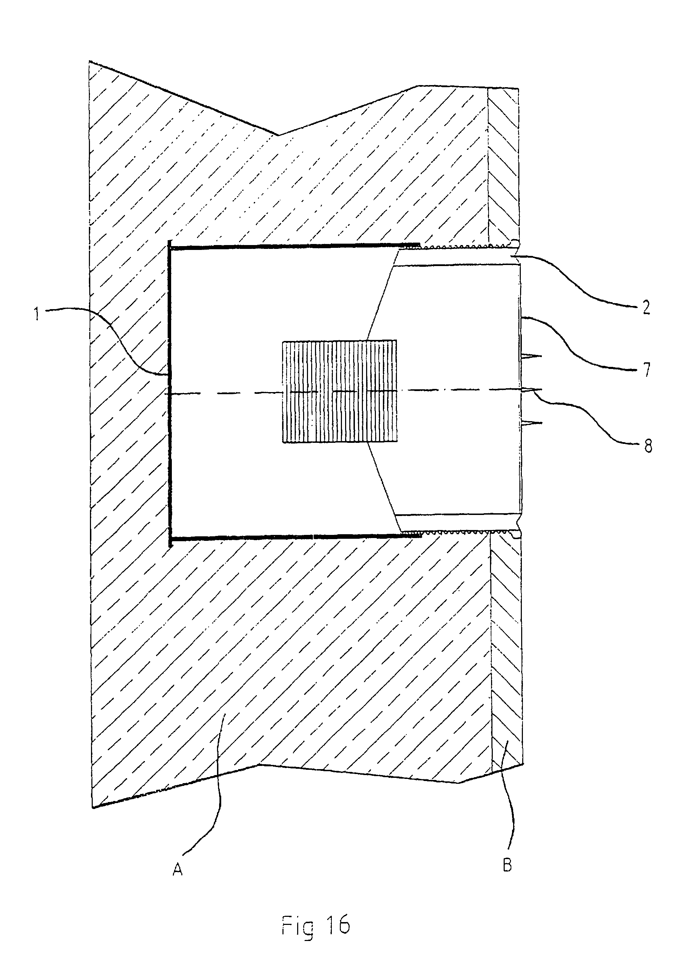

Das Ausführungsbeispiel einer Aufnahmedose, das in Verbindung mit den Fig. 1 bis 5 beschrieben ist, ist insbesondere zur Montage in einer Wand, wie beispielsweise einer Ziegel- oder Betonwand, vorgesehen, auf die ein Wandputz in einer oder mehrerer Schichten aufgetragen ist, wie in Fig. 16 gezeigt.

Nachfolgend wird die Montage einer derartigen Aufnahmedose gemäß dem ersten Ausführungsbeispiel beispielhaft in einer Ziegelwand, die verputzt wird, erläutert, wobei die Funktion und die Vorteile der genannten Aufnahmedose beschrieben wird.

Zunächst wird das Dosenunterteil 1 an einem Grundabschnitt A eines Wand- bzw. Deckenabschnitts befestigt. Dabei wird das Dosenunterteil 1 in eine vorgefertigte Öffnung in der Ziegel- oder Betonwand eingesetzt und mit Gips und dergleichen befestigt.

Danach werden die elektrischen Leitungen (nicht gezeigt) in das Dosenunterteil 1 bzw. in eine Mehrzahl von Dosenunterteilen eingesetzt und entsprechend der gewünschten Schaltung verklemmt. Somit kann in vorteilhafter Weise die elektrische Installation bei der "offenen" Wand (ohne Putzschicht) vorgenommen und anschließend geprüft werden und gegebenenfalls einfach und schnell geändert werden.

Anschließend wird das Dosenoberteil 2 an dem Dosenunterteil 1 angebracht, wobei zumindest das Dosenoberteil 2 von dem Grundabschnitt A der Wand hervorsteht. Gemäß dem ersten Ausführungsbeispiel wird das Dosenoberteil 2 in das Dosenunterteil 1 eingesetzt, wobei das Dosenoberteil 2 von der Ziegel- oder Betonwand (Grundabschnitt) A hervorsteht. Durch den Putzdeckel 7 an dem Dosenoberteil ist die elektrische Installation (Kabel, Klemmen, etc.) in der Aufnahmedose vor Verschmutzung und Beschädigung geschützt.

Anschließend wird zumindest eine erste Materialschicht (Wand- oder Deckenputz) B auf den Grundabschnitt (Ziegel- oder Betonwand) A aufgetragen, wobei diese erste Materialschicht B zumindest einen Teil der äußeren Umfangsfläche des Dosenoberteils 2 umgibt. Somit wird eine erste Putzschicht B auf der Ziegel- oder Betonwand A aufgetragen und die Aufnahmedose, bestehend aus Dosenunterteil 1 und Dosenoberteil 2, eingeputzt. Dabei wird das Dosenoberteil 2 aufgrund der Rastverzahnung 3, 4 zunächst in seiner Lage gehalten und steht über die Putzschicht hervor.

Anschließend wird das Dosenoberteil 2 bezüglich des Dosenunterteils 1 verschoben zur Anpassung der Lage des Dosenoberteils 2 an die Schichtdicke der aufgetragenen ersten Materialschicht. Diese Verschiebung erfolgt zu einem Zeitpunkt, bei dem der aufgetragene Putz noch feucht ist, so daß diese Verschiebung problemlos möglich ist. In bevorzugter Weise erfolgt diese Verschiebung, indem ein Putzbrett oder dergleichen auf das Dosenoberteil 2 gedrückt wird, so daß dieses in das Dosenunterteil 1 bei Überwindung des Widerstands durch die Rastverzahnung 3, 4 geschoben wird.

Dabei kommt die vorgenannte Halteeinrichtung 9, die beispielsweise eine oder mehrere umlaufende Rippen oder eine oder mehrere vorstehende Noppen aufweist, in den Bereich der noch feuchten Putzschicht, wobei dieser Putz die vorstehenden Bereiche umschließt, um nach Aushärten des Putzes das Dosenoberteil 2 sicher in der entsprechenden Position zu halten.

In den meisten Fällen ist es gewünscht, die Aufnahmedose putzbündig anzuordnen, so daß das Dosenoberteil 2 nach der Anpassung der Lage desselben im wesentlichen bündig mit der Oberfläche der aufgetragenen ersten Materialschicht abschließt. Nach dem Hineindrücken des Dosenunterteils mit dem Putzbrett kann der Verputzer den Putz im Bereich der Aufnahmedose einfach und schnell glatt ziehen. Dadurch läßt sich auf einfache Weise die gewünschte Putzbündigkeit der Aufnahmedose erreichen.

Da das Dosenoberteil 2 gemäß der genannten Ausführungsform in vorteilhafter Weise eine Abdeckung 7 bzw. einen Putzdeckel aufweist, wird verhindert, daß Putz oder dergleichen in das Innere der Aufnahmedose während der Verputzarbeiten eintritt. Nach dem Aushärten des Putzes wird dann der Putzdeckel entlang der Perforation aus dem Dosenoberteil 2 herausgebrochen, so daß der Innenraum zur Aufnahme des elektrischen Einsatzes zugänglich ist.

Die Aufnahmedose (d.h. das Dosenoberteil 2) ist putzbündig angeordnet und schließt mit dem umliegenden Putz sauber ab. Ein Nachverputzen des Dosenrandes ist nicht mehr notwendig.

Anschließend kann in einfacher und zeitsparender Weise der entsprechende elektrische Einsatz, wie beispielsweise eine Steckdose oder ein Lichtschalter, verkabelt und eingeschraubt werden.

In manchen Fällen ist es gewünscht, eine zweite Materialschicht, wie einen Feinputz oder dergleichen, auf die erste Materialschicht aufzutragen. Dies kann bei der Aufnahmedose gemäß der genannten Ausführungsform auch nach der Anpassung der Lage des Dosenoberteils 2 an die Oberfläche der aufgetragenen ersten Materialschicht erfolgen. Dabei wird die zweite Materialschicht bzw. der Feinputz auf die erste Materialschicht bzw. den Grundputz aufgetragen, wobei der Feinputz auch auf die Abdeckung 7 des Dosenoberteils 2 aufgetragen wird. Dabei stehen die in bevorzugter Weise auf der Abdeckung 7 vorgesehenen Vorsprünge 8 aus dem Feinputz hervor, so daß die Lage der Aufnahmedose unter dem Feinputz in einfacher Weise festgestellt werden kann. Da die genannten Vorsprünge 8 aus einem elastisch verformbaren Material gebildet sind, behindern diese das Auftragen einer zweiten Materialschicht bzw. eines Feinputzes nicht.

Nach dem Auftragen und dem Aushärten des Feinputzes wird die Abdeckung 7 zusammen mit der zweiten Materialschicht (Feinputz) entfernt. Dabei läßt sich die Lage der Abdeckung 7 in einfacher Weise durch die Vorsprünge 8 bestimmen und die Abdeckung aus dem Dosenoberteil herausbrechen, so daß der Innenraum der Aufnahmedose zur Aufnahme eines elektrischen Einsatzes freiliegt.

Durch die Aufnahmedose gemäß der ersten Ausführungsform ist es auf vorteilhafte Weise möglich, die elektrische Installation bereits auf der rohen Ziegelwand anzubringen und zu prüfen, wobei die Installation während der nachfolgenden Arbeiten vor Verschmutzung und Beschädigung geschützt ist. Durch die putzbündige Anordnung des Dosenoberteils 2 ist ein Auffinden der entsprechenden Aufnahmedose problemlos möglich. Insbesondere wird das Auffinden durch die genannten Vorsprünge 8 erheblich erleichtert.

Nachfolgend wird eine zweite Ausführungsform der Aufnahmedose für elektrische Einsätze näher beschrieben. Bei dieser zweiten Ausführungsform sind Teile, die gleich oder ähnlich der ersten Ausführungsform sind, mit gleichen Bezugszeichen bezeichnet. Bei der Beschreibung der zweiten Ausführungsform sind Teile und Funktionen, die gleich oder ähnlich der ersten Ausführungsform sind, weggelassen, und es wird an dieser Stelle entsprechend auf die bereits gemachten Erläuterungen verwiesen.

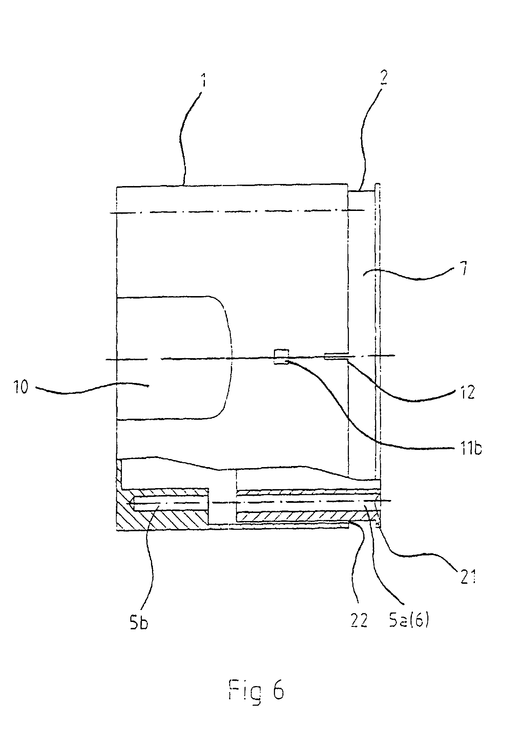

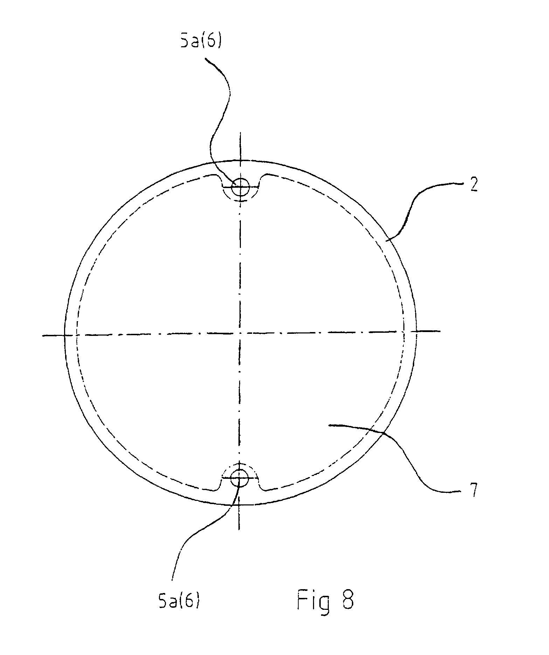

Figur 6 zeigt eine zweite Ausführungsform der Aufnahmedose für elektrische Einsätze mit einem Dosenunterteil 1 und einem Dosenoberteil 2, das entlang einer Längsachse des Dosenunterteils 1 axial einstellbar ist. Bei dieser Ausführungsform erfolgt die axiale Einstellung über zumindest eine Schraube (nicht gezeigt), die in eine Aufnahmebohrung 5a des Dosenoberteils 2 eingesetzt und in Eingriff mit einer Aufnahmebohrung 5b in dem Dosenunterteil 1 ist, um so die Lage des Dosenoberteils 2 bezüglich des Dosenunterteils 1 einzustellen. Wie bereits erläutert, kann dabei ein Gewinde in der Aufnahmebohrung 5b bereits vorgesehen sein bzw. ein Gewindeeinsatz angebracht sein oder in bevorzugter Weise das Gewinde durch die Schraube in die Aufnahmebohrung 5b geschnitten werden. Wie aus den Fig. 8 bis 11 hervorgeht sind an dem Dosenunterteil 1 und dem Dosenoberteil 2 jeweils zwei Aufnahmebohrungen 5a, 5b vorgesehen die in Ausrichtung aufeinander und um 180 ° zueinander versetzt angeordnet sind.

Alternativ dazu kann bei dieser zweiten Ausführungsform auch eine Rastverzahnung oder dergleichen, wie in Verbindung mit der ersten Ausführungsform beschrieben, verwendet werden. Bei dieser zweiten Ausführungsform dient die Lagebefestigungseinrichtung in Form der Einstellschraubeneinrichtung mit den Aufnahmebohrungen 5a und 5b gleichzeitig als Einsatzbefestigungseinrichtung 6, wodurch die Lageeinstellung gleichzeitig mit der Befestigung des elektrischen Einsatzes erfolgen kann.

Wie in Figur 8 gezeigt, weist das Dosenoberteil 2 gemäß der zweiten Ausführungsform ebenfalls eine Abdeckung 7 auf, die einstückig mit dem Dosenoberteil 2 ausgebildet ist, wobei eine Perforation 7a vorgesehen ist, um ein Herausbrechen der Abdeckung 7 zu ermöglichen, wie dies bereits bei der ersten Ausführungsform beschrieben ist. Alternativ dazu kann auch bei der zweiten Ausführungsform eine separat ausgebildete Abdeckung vorgesehen sein, die in das Dosenoberteil 2 eingesetzt wird, wie dies in Verbindung mit der ersten Ausführungsform beschrieben ist.

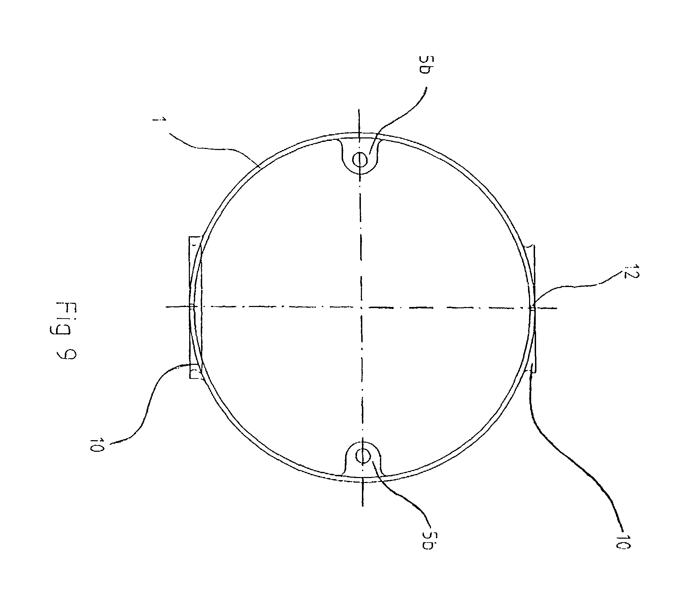

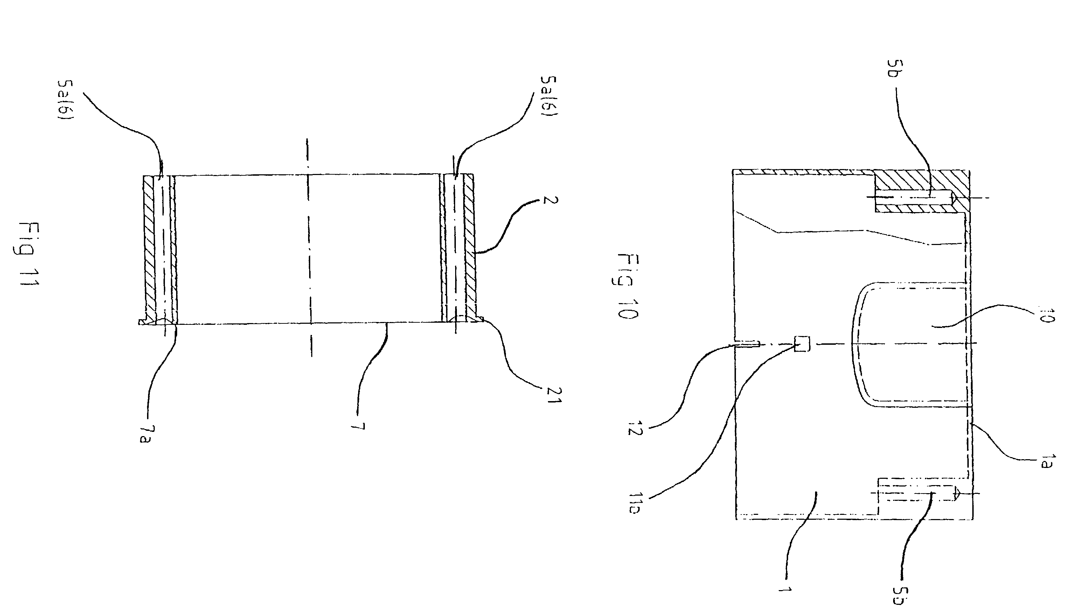

Die Fig. 9 und 10 zeigen Ansichten des Dosenunterteils 1, das in ähnlicher Weise wie das Dosenunterteil 1 gemäß der ersten Ausführungsform ausgebildet ist.

Wie aus den Fig. 6 und 11 hervorgeht, weist das Dosenoberteil 2 einen radial nach außen vorstehenden Flanschabschnitt 21 an dessen vorderen Endabschnitt auf. Die Funktion dieses Flanschabschnitts 21 wird später erläutert.

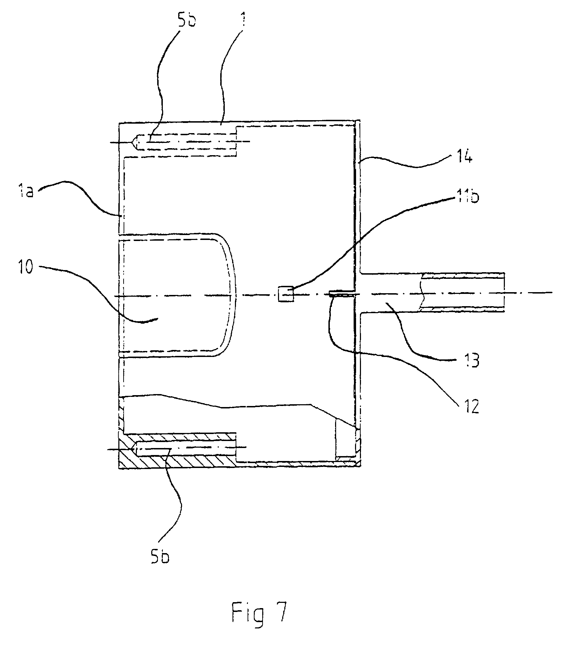

Gemäß dem zweiten Ausführungsbeispiel ist ein Deckel (Bohrdeckel) 14 im wesentlichen senkrecht zur Längsachse des Dosenunterteils 1 angeordnet. Dieser Deckel 14 ist entfernbar an dem Dosenkörper 1 vorgesehen, wobei sich ein Zentrierabschnitt 13 ausgehend von dem Deckel 14 erstreckt. In bevorzugter Weise ist der Zentrierabschnitt 13 einstückig mit dem Deckel 14 ausgebildet. Wie aus Fig. 7 hervorgeht, erstreckt sich der Zentrierabschnitt 13 entlang einer Längsachse des Dosenunterteils 1. Dieser Zentrierabschnitt 13 erstreckt sich über die axiale Länge des Dosenunterteils 1 hinaus, so daß der Zentrierabschnitt 13 von dem Dosenunterteil 1 hervorsteht. Wie aus den Fig. 7 und 12 sowie 14 hervorgeht, weist der Zentrierabschnitt 13 eine Zentrierbohrung 15 auf, die zentrisch bezüglich des zylinderförmigen Dosenunterteils 1 ausgebildet ist.

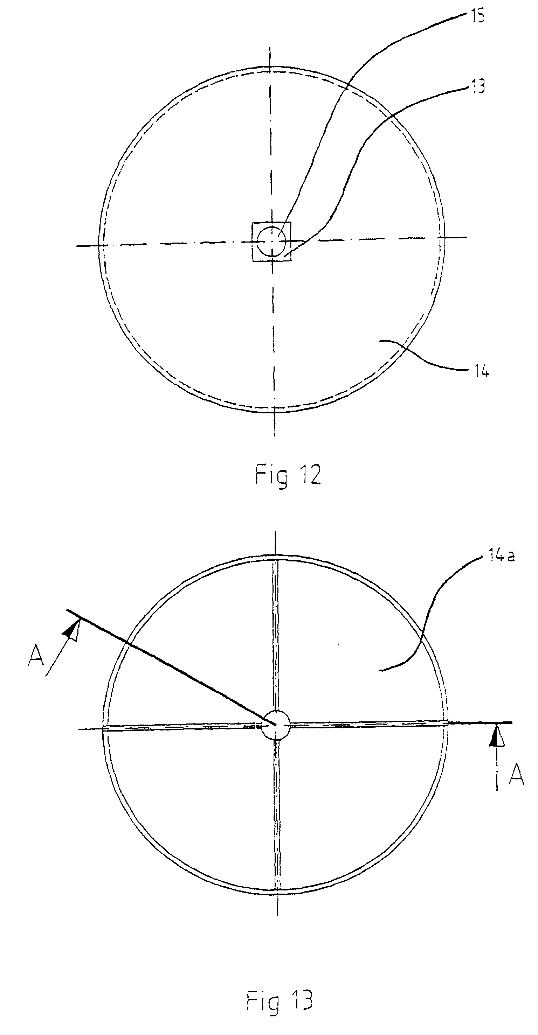

Der Zentrierabschnitt 13 ist rohrförmig ausgebildet und zum Eingriff mit einer Schablone 18 vorgesehen, wie dies später noch erläutert wird. Gemäß dem zweiten Ausführungsbeispiel ist der Zentrierabschnitt 13 in bevorzugter Weise viereckig bzw. quadratisch ausgebildet, wie dies in Fig. 12 gezeigt ist.

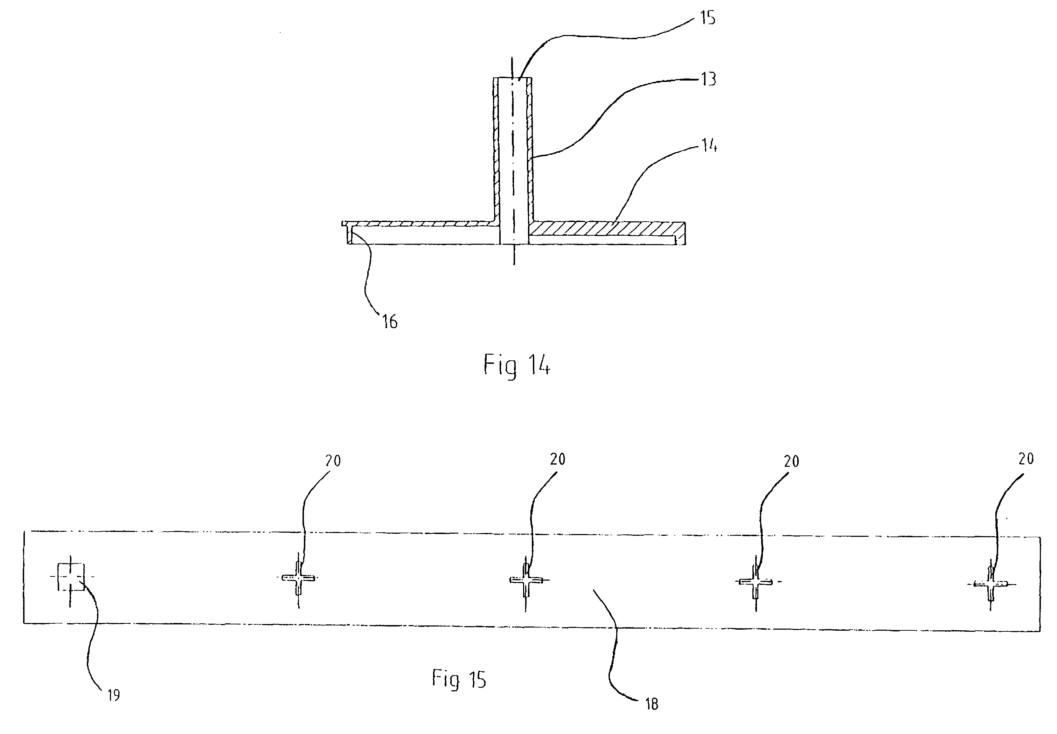

Der separat ausgebildete Deckel 14, wie in den Fig. 7 bzw. 14 gezeigt ist, weist einen umlaufenden Halteflansch 16 und eine axiale Anschlageinrichtung 17 auf, wobei der Halteflanschabschnitt 16 sich im wesentlichen senkrecht zu dem Deckel 14 erstreckt und in Kontakt mit dem Dosenunterteil 1 bringbar ist. Durch den umlaufenden Halteflansch 16 wird der Deckel 14 sicher in der vorderen Öffnung des Dosenunterteils 1 gehalten und die Anschlageinrichtung 17 in Form eines radial vorstehenden Flanschabschnitts verhindert, daß der Deckel 14 in das Dosenunterteil 1 hineingedrückt werden kann.

Alternativ dazu kann der Zentrierabschnitt auch an einer hinteren Wand des Dosenunterteils vorgesehen sein und sich in entsprechender Weise durch eine Öffnung des Deckels erstrecken. Bei dieser Variante ist der Zentrierabschnitt einstückig mit dem Dosenunterteil ausgebildet und wird herausgebrochen bzw. herausgeschnitten, wenn der Zentrierabschnitt nicht mehr benötigt wird.

Bei dieser Ausführungsform ist eine Eingriffseinrichtung zwischen dem genannten Dekkel 14 und dem Dosenunterteil 1 vorgesehen. Dabei greift ein Vorsprung in die als Kerbe oder Schlitz ausgebildete Lagemarkierung 12 ein, um die radiale Lage des Deckels 14 bezüglich des Dosenunterteils 1 eindeutig zu bestimmen.

Um die Steifigkeit des Deckels 14 zu erhöhen, sind an dessen Unterseite mehrere radial verlaufende Verstärkungsrippen vorgesehen, wie dies in Fig. 13 gezeigt ist.

In dem gezeigten Ausführungsbeispiel ist der Deckel 14 als durchgehende Abdeckfläche ausgebildet. Alternativ dazu können auch Durchbrüche in dem Deckel ausgebildet sein. Diese Durchbrüche können so gestaltet sein, daß der Deckel im wesentlichen eine Mehrzahl von Stegen aufweist, die den Zentrierabschnitt halten.

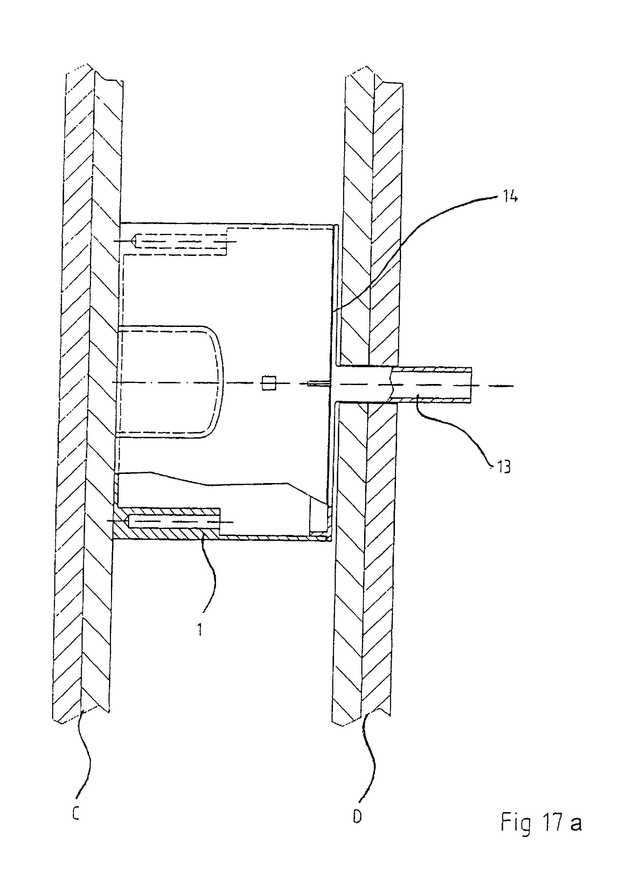

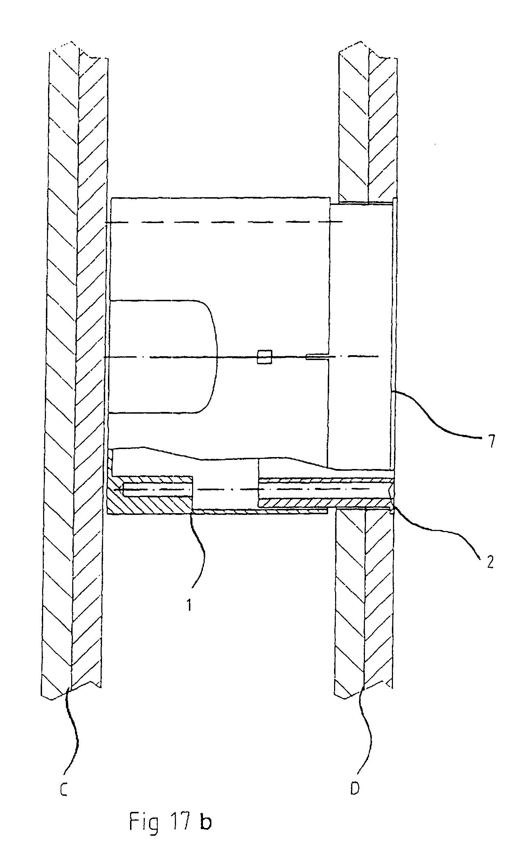

Die beschriebene zweite Ausführungsform der Aufnahmedose ist insbesondere für die Montage in einer Hohlwand vorgesehen, wie dies in Fig. 17b gezeigt ist. Bei der Montage der Aufnahmedose gemäß der zweiten Ausführungsform wird zunächst das Dosenunterteil 1 an einer Innenfläche eines ersten Seitenwandabschnitts (hintere Gipsplatte) C befestigt. Dazu kann beispielsweise der hintere Wandabschnitt des Dosenunterteils 1 an der Innenseitenfläche einer Gipsplatte C angeklebt werden, wie dies in Fig. 17a gezeigt ist. Nachdem eine oder mehrere Dosenunterteile 1 an der Innenfläche des ersten Seitenwandabschnitts C befestigt sind, kann die Verkabelung und Prüfung der gewünschten Schaltung erfolgen. Dies ist bei der noch nicht geschlossenen Hohlwand problemlos möglich. Anschließend wird die Hohlwand durch einen zweiten Seitenwandabschnitt (vordere Gipsplatte) D geschlossen, so daß das Dosenunterteil 1 in dem Hohlraum angeordnet ist.

Ist der in bevorzugter Weise vorgesehene Bohrdeckel 14 mit dem Zentrierabschnitt 13 vorwendet (siehe Fig 17a), so ist es notwendig, einen entsprechenden Durchbruch bzw. eine Öffnung an der entsprechenden Stelle in der zweiten Seitenwand D vorzusehen.

Anschließend wird eine Öffnung in der zweiten Seitenwand ausgebildet, in einem Bereich des Dosenunterteils 1, wobei die Öffnung zumindest eine Größe zur Aufnahme des Dosenoberteils 2 aufweist. Dies erfolgt in bevorzugter Weise unter Zuhilfenahme des Zentrierabschnitts 13, wobei ein Zentrierdorn eines Fräs- oder Schneidkopfes (nicht gezeigt) in die Zentrieröffnung 15 des Zentrierabschnitts 16 eingesetzt wird, um so eine zentrisch angeordnete saubere Öffnung in den zweiten Seitenwandabschnitt D zu schneiden.

Anschließend wird das Dosenoberteil 2 in die Öffnung des zweiten Seitenwandabschnitts eingesetzt, wobei das Dosenoberteil 2 sich in Richtung des Dosenunterteils 1 erstreckt.

Nachfolgend wird das Dosenoberteil 2 bezüglich des Dosenunterteils 1 zur Anpassung einer Lage des Dosenoberteils 2 an eine äußere Seitenoberfläche des zweiten Seitenwandabschnitts D verschoben. Der vorgenannte Flanschabschnitt 21 des Dosenoberteils 2 kommt dabei in Anlage mit der genannten Seitenoberfläche, so daß ein vorderer Endabschnitt des Dosenoberteils 2 nach der Anpassung der Lage des Dosenoberteils 2 im wesentlichen bündig mit der äußeren Seitenoberfläche des zweiten Seitenwandabschnitts D ist (siehe Fig 17b).

Das Dosenoberteil 2 gemäß der zweiten Ausführungsform weist in bevorzugter Weise eine Abdeckung 7 auf, um ein Verschmutzen des Innenraums, der durch das Dosenunterteil 1 und das Dosenoberteil 2 gebildet ist, und eine Beschädigung der bereits erfolgten Installation zu verhindern. Um den elektrischen Einsatz montieren zu können, muß nun die Abdeckung 7 nach der Anpassung der Lage des Dosenoberteils 2 an die äußere Seitenoberfläche des zweiten Wandabschnitts entfernt werden.

Vor der Entfernung der Abdeckung 7 kann auch zumindest eine Materialschicht, insbesondere eine Tapeten und/oder Farbschicht, auf die äußere Seitenoberfläche des zweiten Seitenwandabschnitts D und die Außenfläche der Abdeckung 7 nach der Anpassung der Lage des Dosenoberteils 2 an die äußere Seitenoberfläche des zweiten Seitenwandabschnitts D aufgetragen werden, wobei der Innenraum der Aufnahmedose vor Verschmutzung geschützt ist. Dadurch sind die Anschlußkabel und die Anschlußklemmen in der Dose vor Beschädigung und Verschmutzung geschützt. Nach dem Anbringen der Tapete oder des Farbanstrichs wird die Abdeckung 7 entfernt, um den elektrischen Einsatz zu montieren.

Wie aus Fig. 17b hervorgeht, ist bei der Aufnahmedose gemäß dem zweiten Ausführungsbeispiel die Lagebefestigungseinrichtung in Form der Einstellschraubeneinrichtung vorgesehen. Wenn der genannte Flanschabschnitt 21 des Dosenoberteils 2 in Kontakt mit der Seitenoberfläche des zweiten Seitenwandabschnitts D ist werden die Einstellschraube bzw. die Einstellschrauben in die entsprechenden Bohrungen eingesetzt und angezogen, um die Lage des Dosenoberteils 2 bezüglich dem Dosenunterteil 1 anzupassen. Dadurch wird das Dosenunterteil 1 in Richtung des zweiten Seitenwandabschnitts D gezogen, bis eine vordere Kante 22 des Dosenunterteils 1 in Kontakt mit der Innenfläche des zweiten Seitenwandabschnitts D kommt. Dadurch wird die Aufnahmedose sicher in dem zweiten Seitenwandabschnitt D gehalten und die "Putzbündigkeit" der Aufnahmedose, d.h. der bündige Übergang der Vorderkante des Dosenoberteils 2 der Aufnahmedose mit der Seitenoberfläche des zweiten Seitenwandabschnitts D, ist sichergestellt.

Wie bereits in Verbindung mit dem ersten Ausführungsbeispiel erläutert, ist an dem Dosenunterteil 1 gemäß dem zweiten Ausführungsbeispiel ebenfalls eine Verbindungseinrichtung 11 in Form eines Verriegelungsvorsprungs 11a und einer Verriegelungsöffnung 11b vorgesehen, um mehrere Dosenunterteile 1 in einer Reihe anzuordnen. Weiterhin ist bereits in Verbindung mit dem ersten Ausführungsbeispiel eine einstückige Ausbildung mehrerer Dosenunterteile beschrieben. Eine derartige einstückige Ausbildung der Dosenunterteile ist auch in entsprechender Weise bei dem zweiten Ausführungsbeispiel möglich.

Wie bereits ausgeführt, ist der Zentrierabschnitt 13 gemäß der zweiten Ausführungsform in bevorzugter Weise viereckig bzw. quadratisch ausgebildet. Dies bedeutet, daß die Außenfläche des Zentrierabschnitts 13 keinen rotationssymmetrischen Querschnitt aufweist. Somit ist die radiale Lage des Dosenunterteils 1 entweder durch die integrale Verbindung des Zentrierabschnitts 13 mit dem Dosenunterteil 1 oder durch die Eingriffseinrichtung 12 des Deckels 14 mit dem Dosenunterteil 1 eindeutig festzulegen. Die Position aller weiteren Dosenunterteile 1 ergibt sich daher in eindeutiger Weise aus der Lage des Zentrierabschnitts 13. Daher ist es nicht notwendig, bei jedem Dosenunterteil 1 einen entsprechenden Zentrierabschnitt 13 vorzusehen, um auf einfache Weise die Lage der weiteren Dosenunterteile 1 zu bestimmen. Dadurch kann auf vorteilhafte Weise die Zahl der genannten Durchbrüche in dem zweiten Seitenwandabschnitt reduziert werden.

Da sowohl Abstand als auch Lage der weiteren Dosenunterteile 1 von dem Zentrierabschnitt 13 eindeutig über die Verbindungseinrichtungen 11 bestimmt ist, kann deren Position in einfacher Weise durch die in Fig. 15 gezeigte Schablone 18 ermittelt werden. Diese Schablone 18 weist eine Eingriffsöffnung 19 auf, die entsprechend dem Querschnitt des Zentrierabschnitts 13 ausgebildet ist. Weiterhin sind in vorgegebenen Abständen von der Öffnung 19 Markierungsöffnungen 20 in Form eines Kreuzes vorgesehen, die der Lage der weiteren Dosenunterteile 1 bezüglich des ersten Dosenunterteils 1 entsprechen. Die genannte Schablone 18 wird mit der Öffnung 19 über den Zentrierabschnitt 13 gesteckt, und die Lage der weiteren Dosenunterteile 1 kann über die Markierungsöffnungen 20 an der äußeren Seitenoberfläche des zweiten Seitenwandabschnitts markiert werden, um anschließend in einfacher Weise die entsprechenden Öffnungen in der Wand auszubilden.

Die gezeigte Schablone 18 zeigt die Aufnahmeöffnung 19 und die Markierungsöffnungen 20 auf einer Seite (nach rechts in Fig. 15) bezüglich dieser Aufnahmeöffnung 19. Die Aufnahmeöffnung kann jedoch auch in einen Mittelabschnitt der Schablone vorgesehen sein, wobei sich die Markierungsöffnungen auf beiden Seiten von der Aufnahmeöffnung erstrecken, so daß der Zentrierabschnitt sich nicht notwendigerweise an dem ersten Dosenunterteil befinden muß.

Bei der gezeigten Schablone 18 ist die Aufnahmeöffnung 19 sowie der Querschnitt des korrespondierenden Zentrierabschnitts 13 in bevorzugter Weise nicht rotationssymmetrisch, jedoch achssymmetrisch ausgebildet, so daß die entsprechenden Dosenunterteile 1 in einfacher Weise durch Umstecken der Schablone 18 aufgefunden werden können, auch wenn der Zentrierabschnitt 13 nicht an dem ersten Dosenunterteil 1 vorgesehen ist.

Durch die Aufnahmedosen für elektrische Einsätze gemäß der gezeigten Ausführungsformen ist es auf vorteilhafte Weise möglich, elektrische Einsätze, insbesondere Steckdosen, Schalterdosen, Verteilerdosen oder dergleichen in zuverlässiger und kostengünstiger Weise in einer Wand bzw. einer Decke zu montieren und auf einfache Weise die VDE-Vorschriften zu erfüllen.

## Patentansprüche

1. Aufnahmedose für elektrische Einsätze, insbesondere für Steckdosen, Schalterdosen, Verteilerdosen, Lampeneinsätzen oder dergleichen, zur Montage in einer Wand bzw. Decke, insbesondere in Mauerwerk oder Hohlwänden, mit einem Dosenunterteil und einem Dosenoberteil, das entlang einer Längsachse des Dosenunterteiles (1) axial einstellbar vorgesehen ist, und mit einer Abdeckung (7), die einstückig mit und lösbar an dem Dosenoberteil (2) vorgesehen ist, zum Verschließen eines Innenraumes, der durch das Dosenoberteil (2) und das Dosenunterteil (1) gebildet ist.

2. Aufnahmedose nach Anspruch 1, **dadurch gekennzeichnet, daß** das Dosenunterteil (1) in das Dosenoberteil (2) einsetzbar ist.

3. Aufnahmedose nach Anspruch 1 oder 2, **dadurch gekennzeichnet, daß** das Dosenunterteil (1) einen hinteren Endabschnitt mit einem Befestigungsabschnitt, und einen vorderen Endabschnitt aufweist, wobei der vordere Endabschnitt des Dosenunterteils (1) überlappend mit einem hinteren Endabschnitt des Dosenoberteils (2) angeordnet ist, wenn das Dosenoberteil (2) an dem Dosenunterteil (1) angebracht ist.

4. Aufnahmedose nach einem der vorhergehenden Ansprüche 1 bis 3, **dadurch gekennzeichnet, daß** eine Lagebefestigungseinrichtung zur Befestigung des Dosenoberteils (2) an dem Dosenunterteil (1) vorgesehen ist.

5. Aufnahmedose nach Anspruch 4, **dadurch gekennzeichnet, daß** die Lagebefestigungseinrichtung eine erste Rastverzahnung (3) an dem Dosenunterteil (1) und eine zweite Rastverzahnung (4) an dem Dosenoberteil (2) aufweist, wobei die erste und zweite Rastverzahnung (3,4) lösbar miteinander in Eingriff bringbar sind.

6. Aufnahmedose nach Anspruch 5, **dadurch gekennzeichnet, daß** das Dosenoberteil (2) in Richtung von dem Dosenunterteil (1) weg durch die erste und zweite Rastverzahnung (3,4) gehalten ist und in Richtung zu dem Dosenunterteil (1) verschiebbar ist.

7. Aufnahmedose nach Anspruch 5 oder 6, **dadurch gekennzeichnet, daß** die erste und die zweite Rastverzahnung (3,4) jeweils integral mit dem Dosenunterteil und dem Dosenoberteil (2) ausgebildet ist.

8. Aufnahmedose nach Anspruch 4, **dadurch gekennzeichnet, daß** die Lagebefestigungseinrichtung eine Einstellschraubeneinrichtung (5a,b) mit zumindest einer Einstellschraube aufweist, die mit dem Dosenunterteil (1) und dem Dosenoberteil (2) in Eingriff ist.

9. Aufnahmedose nach zumindest einem der vorhergehenden Ansprüche 1 bis 8, **dadurch gekennzeichnet, daß** zumindest eine Einsatzbefestigungseinrichtung (6) an dem Dosenoberteil (2) und/oder dem Dosenunterteil (1) vorgesehen ist.

10. Aufnahmedose nach zumindest einem der vorhergehenden Ansprüche 1 bis 9, **dadurch gekennzeichnet, daß** die Abdeckung (7) mit dem Dosenoberteil (2) durch ein Soll-Trennbereich (7a), insbesondere eine Perforation, an der Abdeckung (7) verbunden ist.

11. Aufnahmedose nach zumindest einem der vorhergehenden Ansprüche 1 bis 10, **dadurch gekennzeichnet, daß** die Abdeckung (7) zumindest einen Vorsprung (8), insbesondere aus einem elastisch verformbaren Material, aufweist, der sich von dem Dosenoberteil (2) weg erstreckt.

12. Aufnahmedose nach zumindest einem der vorhergehenden Ansprüche 1 bis 11, **dadurch gekennzeichnet, daß** das Dosenoberteil (2) einen Halteabschnitt (9) mit zumindest einen nach außen vorstehenden Bereich aufweist.

13. Aufnahmedose nach zumindest einem der vorhergehenden Ansprüche 1 bis 12, **dadurch gekennzeichnet, daß** das Dosenunterteil (1) eine Lagemarkierung (12) aufweist.

14. Aufnahmedose nach zumindest einem der vorhergehenden Ansprüche 1 bis 13, **dadurch gekennzeichnet, daß** das Dosenunterteil (1) und das Dosenoberteil (2) im wesentlichen zylinderförmig ausgebildet ist.

15. Aufnahmedose nach zumindest einem der vorhergehenden Ansprüche 1 bis 14, **dadurch gekennzeichnet, daß** das Dosenunterteil und/oder das Dosenoberteil zur Aufnahme einer Mehrzahl von elektrischen Einsätzen vorgesehen ist.

16. Verfahren zur Montage einer Aufnahmedose mit einem Dosenoberteil (2) und einem Dosenunterteil (1) zur Aufnahme elektrischer Einsätze, insbesondere Steckdosen, Schalterdosen, Verteilerdosen, Lampeneinsätzen oder dergleichen in einem Wand- bzw. Deckenabschnitt, insbesondere einem Mauerwerk, wobei das Dosenoberteil entlang einer Längsachse des Dosenunterteils (1) einstellbar vorgesehen ist, mit den folgenden Schritten:
Befestigen des Dosenunterteils (1) an einem Grundabschnitt des Wand- bzw. Deckenabschnitts,
Anbringen des Dosenoberteils (2) an dem Dosenunterteil (1), wobei zumindest das Dosenoberteil (2) von dem Grundabschnitt hervorsteht, und einstückig mit einer lösbar an dem Dosenoberteil (2) ausgebildeten Abdeckung versehen ist, zum Verschließen eines Innenraumes, der durch das Dosenoberteil (2) und das Dosenunterteil (1) gebildet ist,
Auftragen zumindest einer ersten Materialschicht auf dem Grundabschnitt, wobei die erste Materialschicht zumindest einen Teil einer äußeren Umfangsfläche des Dosenoberteils (2) umgibt,
Verschieben des Dosenoberteils (2) bezüglich des Dosenunterteils (1) zur Anpassung einer Lage des Dosenoberteils (2) an eine Schichtdicke der aufgetragenen ersten Materialschicht.

17. Verfahren zur Montage einer Aufnahmedose nach Anspruch 16, **dadurch gekennzeichnet, daß** ein vorderer Endabschnitt des Dosenoberteils (2) im wesentlichen bündig mit einer Oberfläche der aufgetragenen ersten Materialschicht abschließt, nach der Anpassung der Lage des Dosenoberteils (2).

18. Verfahren zur Montage einer Aufnahmedose mit einem Dosenunterteil (1) und einem Dosenoberteil (2) zur Aufnahme elektrischer Einsätze, insbesondere Steckdosen, Schalterdosen, Verteilerdosen, Lampeneinsätzen oder dergleichen in einer Hohlwand bzw. Hohldecke, die einen ersten und zweiten Seitenwandabschnitt zur Bildung eins Hohlraums aufweist, wobei das Dosenoberteil (2) entlang einer Längsachse des Dosenunterteils (1) einstellbar vorgesehen ist, mit den folgenden Schritten:
Befestigen des Dosenunterteils (1) an einer Innenfläche des ersten Seitenwandabschnitts,
Schließen der Hohlwand durch den zweiten Seitenwandabschnitt, wobei das Dosenunterteil (1) in dem Hohlraum angeordnet ist,
Ausbilden einer Öffnung in dem zweiten Seitenwandabschnitt in einem Bereich des Dosenunterteils (1), wobei die Öffnung zumindest eine Größe zur Aufnahme des Dosenoberteils (2) aufweist,
Einsetzen des Dosenoberteils (2) in die Öffnung des zweiten Seitenwandabschnitts, wobei das Dosenoberteil (2) sich in Richtung des Dosenunterteils (1) erstreckt, und einstückig mit einer lösbar an dem Dosenoberteil (2) ausgebildeten Abdeckung versehen ist, zum Verschließen eines Innenraumes, der durch das Dosenoberteil (2) und das Dosenunterteil (1) gebildet ist,
Verschieben des Dosenoberteils (2) bezüglich des Dosenunterteils zur Anpassung einer Lage des Dosenoberteils (2) an eine äußere Seitenoberfläche des zweiten Seitenwandabschnitts.

19. Verfahren zur Montage einer Aufnahmedose nach Anspruch 18, **dadurch gekennzeichnet, daß** ein vorderer Endabschnitt des Dosenoberteils (2) im wesentlichen bündig mit der äußeren Seitenoberfläche des zweiten Seitenwandabschnitts nach der Anpassung der Lage des Dosenoberteils (2) ist.

## Claims

1. Receiving box for electrical inserts, in particular for sockets, switch boxes, distribution boxes, lamp inserts or the like, for mounting in a wall or ceiling, in particular in masonry or hollow walls, with a box lower part and a box upper part, which is provided axially adjustably along a longitudinal axis of the box lower part (1), and with a covering (7), which is provided integrally with and detachably on the box upper part (2), for closing an interior space formed by the box upper part (2) and the box lower part (1).

2. Receiving box according to Claim 1, **characterised in that** the box lower part (1) is insertable into the box upper part (2).

3. Receiving box according to Claim 1 or 2, **characterised in that** the box lower part (1) has a rear end section with a fixing section, and a front end section, the front end section of the box lower part (1) being arranged so as to overlap a rear end section of the box upper part (2) when the box upper part (2) is attached to the box lower part (1) .

4. Receiving box according to one of the preceding Claims 1 to 3, **characterised in that** a position-fixing arrangement is provided for fixing the box upper part (2) to the box lower part (1).

5. Receiving box according to Claim 4, **characterised in that** the position-fixing arrangement has a first catch toothing (3) on the box lower part (1) and a second catch toothing (4) on the box upper part (2), the first and second catch toothing (3,4) being detachably engageable with each other.

6. Receiving box according to Claim 5, **characterised in that** the box upper part (2) is held in the direction away from the box lower part (1) by the first and second catch toothing (3,4) and is displaceable in the direction towards the box lower part (1).

7. Receiving box according to Claim 5 or 6, **characterised in that** the first and the second catch toothing (3,4) are respectively designed integrally with the box lower part and the box upper part (2).

8. Receiving box according to Claim 4, **characterised in that** the position-fixing arrangement comprises an adjusting-screw arrangement (5a,b) with at least one adjusting screw, which is engaged with the box lower part (1) and the box upper part (2).

9. Receiving box according to at least one of the preceding Claims 1 to 8, **characterised in that** at least one insert-fixing arrangement (6) is provided on the box upper part (2) and/or the box lower part (1).

10. Receiving box according to at least one of the preceding Claims 1 to 9, **characterised in that** the covering (7) is connected to the box upper part (2) by a predetermined separating region (7a), in particular a perforation, on the covering (7).

11. Receiving box according to at least one of the preceding Claims 1 to 10, **characterised in that** the covering (7) has at least one projection (8), in particular made of an elastically deformable material, which extends away from the box upper part (2).

12. Receiving box according to at least one of the preceding Claims 1 to 11, **characterised in that** the box upper part (2) has a holding section (9) with at least one outwardly protruding region.

13. Receiving box according to at least one of the preceding Claims 1 to 12, **characterised in that** the box lower part (1) has a position marker (12).

14. Receiving box according to at least one of the preceding Claims 1 to 13, **characterised in that** the box lower part (1) and the box upper part (2) are of substantially cylindrical design.

15. Receiving box according to at least one of the preceding Claims 1 to 14, **characterised in that** the box lower part and/or the box upper part are/is provided for receiving a plurality of electrical inserts.

16. Method for mounting a receiving box with a box upper part (2) and a box lower part (1) for receiving electrical inserts, in particular sockets, switch boxes, distribution boxes, lamp inserts or the like, in a wall or ceiling section, in particular in masonry, the box upper part being provided adjustably along a longitudinal axis of the box lower part (1), having the following steps:
fixture of the box lower part (1) to a base section of the wall or ceiling section,
attachment of the box upper part (2) to the box lower part (1), at least the box upper part (2) protruding from the base section, and being provided integrally with a covering formed detachably on the box upper part (2), for closing an interior space formed by the box upper part (2) and the box lower part (1),
application of at least one first material layer to the base section, the first material layer surrounding at least part of an outer circumferential surface of the box upper part (2),
displacement of the box upper part (2) relative to the box lower part (1) for the purpose of adjusting a position of the box upper part (2) to a layer thickness of the applied first material layer.

17. Method for mounting a receiving box according to Claim 16, **characterised in that** a front end section of the box upper part (2) terminates substantially flush with a surface of the applied first material layer, after adjusting the position of the box upper part (2).

18. Method for mounting a receiving box with a box lower part (1) and a box upper part (2) for receiving electrical inserts, in particular sockets, switch boxes, distribution boxes, lamp inserts or the like, in a hollow wall or hollow ceiling having a first and second side-wall section for forming a hollow space, the box upper part (2) being provided adjustably along a longitudinal axis of the box lower part (1), having the following steps:
fixture of the box lower part (1) to an inner surface of the first side-wall section,
closure of the hollow wall by the second side-wall section, the box lower part (1) being arranged in the hollow space, formation of an opening in the second side-wall section in a region of the box lower part (1), the opening having at least a size for receiving the box upper part (2),
insertion of the box upper part (2) into the opening of the second side-wall section, the box upper part (2) extending in the direction of the box lower part (1), and being provided integrally with a covering formed detachably on the box upper part (2), for closing an interior space formed by the box upper part (2) and the box lower part (1),
displacement of the box upper part (2) relative to the box lower part for the purpose of adjusting a position of the box upper part (2) to an outer lateral surface of the second side-wall section.

19. Method for mounting a receiving box according to Claim 18, **characterised in that** a front end section of the box upper part (2) is substantially flush with the outer lateral surface of the second side-wall section after adjusting the position of the box upper part (2).

## Revendications

1. Boîte de réception pour appliques électriques, en particulier pour prises de courant, boîtiers d'interrupteurs, boîtes de distribution, appliques d'éclairage ou analogues, pour le montage dans un mur ou plancher, en particulier dans une maçonnerie ou dans des doubles parois, comportant une partie inférieure de boîte et une partie supérieure de boîte, prévue avec une possibilité de réglage axial le long d'un axe longitudinal de la partie inférieure de boîte (1), et comportant une couverture (7), prévue d'une seule pièce avec et de façon amovible sur la partie supérieure de boîte (2), pour la fermeture d'un espace interne formé par la partie supérieure de boîte (2) et par la partie inférieure de boîte (1).

2. Boîte de réception suivant la revendication 1, **caractérisée en ce que** la partie inférieure de boîte (1) peut être insérée dans la partie supérieure de boîte (2).

3. Boîte de réception suivant l'une des revendications 1 et 2, **caractérisée en ce que** la partie inférieure de boîte (1) présente une section extrême arrière comportant une section de fixation, et une section extrême avant, la section extrême avant de la partie inférieure de boîte (1) étant disposée en recouvrement avec une section extrême arrière de la partie supérieure de boîte (2), lorsque la partie supérieure de boîte (2) est mise en place sur la partie inférieure de boîte (1).

4. Boîte de réception suivant l'une des revendications 1 à 3, **caractérisée en ce qu'**un dispositif de fixation de position est prévu pour fixer la partie supérieure de boîte (2) sur la partie inférieure de boîte (1).

5. Boîte de réception suivant la revendication 4, **caractérisée en ce que** le dispositif de fixation de position présente une première denture d'encliquetage (3) sur la partie inférieure de boîte (1) et une seconde denture d'encliquetage (4) sur la partie supérieure de boîte (2), la première et la seconde denture d'encliquetage (3, 4) pouvant être amenées en prise mutuelle de façon amovible.

6. Boîte de réception suivant la revendication 5, **caractérisée en ce que** la partie supérieure de boîte (2) est maintenue éloignée en direction de la partie inférieure de boîte (1) par la première et la seconde denture d'encliquetage (3, 4) et peut être déplacée en direction de la partie inférieure de boîte (1).

7. Boîte de réception suivant l'une des revendications 5 et 6, **caractérisée en ce que** la première et la seconde denture d'encliquetage (3, 4) sont formées d'une seule pièce avec la partie inférieure de boîte et la partie supérieure de boîte (2) respectivement.

8. Boîte de réception suivant la revendication 4, **caractérisée en ce que** le dispositif de fixation de position présente un dispositif de vis d'ajustage (5a, b) comportant au moins une vis d'ajustage en prise avec la partie inférieure de boîte (1) et la partie supérieure de boîte (2).

9. Boîte de réception suivant l'une au moins des revendications précédentes 1 à 8, **caractérisée en ce qu'**au moins un dispositif de fixation d'applique (6) est prévu sur la partie supérieure de boîte (2) et/ou sur la partie inférieure de boîte (1).

10. Boîte de réception suivant l'une au moins des revendications précédentes 1 à 9, **caractérisée en ce que** la couverture (7) est reliée à la partie supérieure de boîte (2) par une zone destinée à la séparation (7a), en particulier une perforation, sur la couverture (7).

11. Boîte de réception suivant l'une au moins des revendications précédentes 1 à 10, **caractérisée en ce que** la couverture (7) présente au moins une saillie (8), en particulier en un matériau déformable élastiquement, qui s'étend à l'écart de la partie supérieure de boîte (2).

12. Boîte de réception suivant l'une au moins des revendications précédentes 1 à 11, **caractérisée en ce que** la partie supérieure de boîte (2) présente une section de maintien (9) comportant au moins une zone dépassant vers l'extérieur.

13. Boîte de réception suivant l'une au moins des revendications 1 à 12, **caractérisée en ce que** la partie inférieure de boîte (1) présente un repère de position (12).

14. Boîte de réception suivant l'une au moins des revendications précédentes 1 à 13, **caractérisée en ce que** la partie inférieure de boîte (1) et la partie supérieure de boîte (2) ont une configuration essentiellement cylindrique.

15. Boîte de réception suivant l'une au moins des revendications précédentes 1 à 14, **caractérisée en ce que** la partie inférieure de boîte et/ou la partie supérieure de boîte sont prévues pour la réception d'une multiplicité d'appliques électriques.

16. Procédé de montage d'une boîte de réception comportant une partie supérieure de boîte (2) et une partie inférieure de boîte (1) pour la réception d'appliques électriques, en particulier de prises de courant, boîtiers d'interrupteurs, boîtes de distribution, appliques d'éclairage ou analogues, dans une section de mur ou de plancher, en particulier une maçonnerie, la partie supérieure de boîte étant prévue avec une possibilité de réglage le long d'un axe longitudinal de la partie inférieure de boîte (1), comprenant les phases suivantes :
fixation de la partie inférieure de boîte (1) sur une section de base de la section de mur ou de plancher,
mise en place de la partie supérieure de boîte (2) sur la partie inférieure de boîte (1), au moins la partie supérieure de boîte (2) dépassant de la section de base,
et étant munie d'une seule pièce d'une couverture réalisée de façon amovible sur la partie supérieure de boîte (2), pour la fermeture d'un espace interne formé par la partie supérieure de boîte (2) et la partie inférieure de boîte (1),
application d'au moins une première couche de matériau sur la section de base, la première couche de matériau enveloppant au moins une partie d'une surface périphérique externe de la partie supérieure de boîte (2),
déplacement de la partie supérieure de boîte (2) par rapport à la partie inférieure de boîte (1) pour l'adaptation d'une position de la partie supérieure de boîte (2) à une épaisseur de couche de la première couche de matériau appliquée.

17. Procédé de montage d'une boîte de réception suivant la revendication 16, **caractérisé en ce qu'**une section extrême avant de la partie supérieure de boîte (2) est essentiellement de niveau avec une surface de la première couche de matériau appliquée, après l'adaptation de la position de la partie supérieure de boîte (2).

18. Procédé de montage d'une boîte de réception comportant une partie inférieure de boîte (1) et une partie supérieure de boîte (2) pour la réception d'appliques électriques, en particulier de prises de courant, boîtiers d'interrupteurs, boîtes de distribution, appliques d'éclairage ou analogues, dans une double paroi ou un plancher creux, qui présente une première et une seconde section de paroi latérale pour la formation d'un espace creux, la partie supérieure de boîte (2) étant prévue avec une possibilité de réglage le long d'un axe longitudinal de la partie inférieure de boîte (1), comprenant les phases suivantes :
fixation de la partie inférieure de boîte (1) sur une surface interne de la première section de paroi latérale,
fermeture de la double paroi par la seconde section de paroi latérale, la partie inférieure de boîte (1) étant disposée dans l'espace creux,
réalisation d'une ouverture dans la seconde section de paroi latérale dans une zone de la partie inférieure de boîte (1), l'ouverture présentant au moins une taille pour recevoir la partie supérieure de boîte (2),
mise en place de la partie supérieure de boîte (2) dans l'ouverture de la seconde section de paroi latérale, la partie supérieure de boîte (2) s'étendant en direction de la partie inférieure de boîte (1), et étant munie d'une seule pièce d'une couverture réalisée de façon amovible avec la partie supérieure de boîte (2), pour la fermeture d'un espace interne formé par la partie supérieure de boîte (2) et la partie inférieure de boîte (1),
déplacement de la partie supérieure de boîte (2) par rapport à la partie inférieure de boîte pour l'adaptation d'une position de la partie supérieure de boîte (2) à une surface latérale externe de la seconde section de paroi latérale.

19. Procédé de montage d'une boîte de réception suivant la revendication 18, **caractérisé en ce qu'**une section extrême avant de la partie supérieure de boîte (2) est essentiellement de niveau avec la surface latérale externe de la seconde section de paroi latérale après l'adaptation de la position de la partie supérieure de boîte (2).
